# EUROPEAN PATENT SPECIFICATION

(11) **EP 0 335 427 B1**
(45) Date of publication and mention of the grant of the patent: **22.09.1993**
(21) Application number: 89200208.0
(22) Date of filing: 01.02.1989
(51) Int. Cl.: B62D 27/06, B60J 5/00

(54) **Transferable pillar for a bodywork with sliding tarpaulin**
Verstellbare Säule für ein Lastkraftfahrzeug mit verschiebbarer Abdeckung
Pilier mobile pour caisse à bache coulissante

(30) Priority: 28.03.1988 BE 8800359
(43) Date of publication of application: 04.10.1989
(73) Proprietor: Van Hool, naamloze vennootschap, B-2578 Lier (BE)
(72) Inventor: Van Hool, Karel-Jozef, B-2578 Koningshooikt (BE)
(74) Representative: Donné, Eddy

(56) References cited:
- FR-A- 2 494 203
- FR-A- 2 585 661
- GB-A- 2 168 011

## Description

The present invention pertains to a supporting structure in a bodywork with sliding tarpaulin, more particularly in a bodywork of which both sides can be freed by sliding the tarpaulin open, in order to achieve the largest possible cargo loading opening in this way, as well in height as in length.

Since a trend exists to continually make these types of bodies longer one has to take the sagging of the roof construction into account inasmuch that it becomes necessary to make provisions for a pillar, usually at the centre of the total length of the bodywork.

A disadvantage of such pillar is that it in fact reduces the cargo loading opening.

In order to bypass this disadvantages proposals have already been made to make this pillar removable.

This however implies that, on the one hand, the pillar has to be placed somewhere during loading and unloading and, on the other hand, that the roof construction sags under influence of its own weight and sometimes in addition under the influence of additional loads such as for instance snow, ice and similar, resulting in a reduction of the entry or loading height.

In order to counteract aforementioned disadvantages proposals have already been made to provide for various locations on the bodywork to secure such a pillar, in such way that the pillar, depending on the dimensions of the cargo, can be placed at another location.

This not only results in several construction points with which such a pillar must cooperate but moreover, in this case, though to a lesser extent, the disadvantage of a certain sagging of the roof construction remains resulting in a reduction of the entry of loading height.

From FR-A-2.494.203 it is known to provide in a transferable pillar which is slidably suspended to the roof construction and which can be coupled to the floor construction at determined locations. In transferred position, the pillar cannot be coupled to the floor construction, resulting in the disadvantage of the sagging of the roof.

The present invention pertains to a supporting structure comprising a transferable pillar which can be placed at any location on the vehicle, i.e. in which said pillar can be placed at a precise location with respect to the cargo to be handled.

This transferable pillar also allows for, according to the invention, ensuring a maximal entry height in all circumstances.

To this end the invention relates to a supporting structure in a bodywork with sliding tarpaulin, comprising at least one pillar slidably suspended to the roof construction of said bodywork, such that it can be slided in the longitudinal direction of said roof construction, characterised in that said pillar is provided at its lower end of a hook which can cooperate with a part of the floor construction carrying said bodywork; in that said pillar is provided of a lever hinged to the pillar, this lever showing at its lower end a support which can rest on the floor construction of said bodywork, and this lever being movable between a position in which the pillar is locked and a position in which the pillar is movable; and in that said hook and support allow the lower end of said pillar to be coupled at any place to a section extending continuously along the edge of the floor construction.

In order to achieve better understanding of the characteristics of the invention, some preferred embodiments are described hereafter by way of example, but without any limitation, whereby reference is made to the accompanying drawings, in which :
figure 1 represents a front view of a supporting structure according to the invention ;
figure 2 represents a view according to line II-II in figure 1 ;
figures 3 and 4 represent similar views to that of figure 2 but for two other characterizing positions ;
figure 5 represents a similar view to that in figure 1, but for a variant embodiment ;
figure 6 represents a view according to line VI-VI in figure 5.

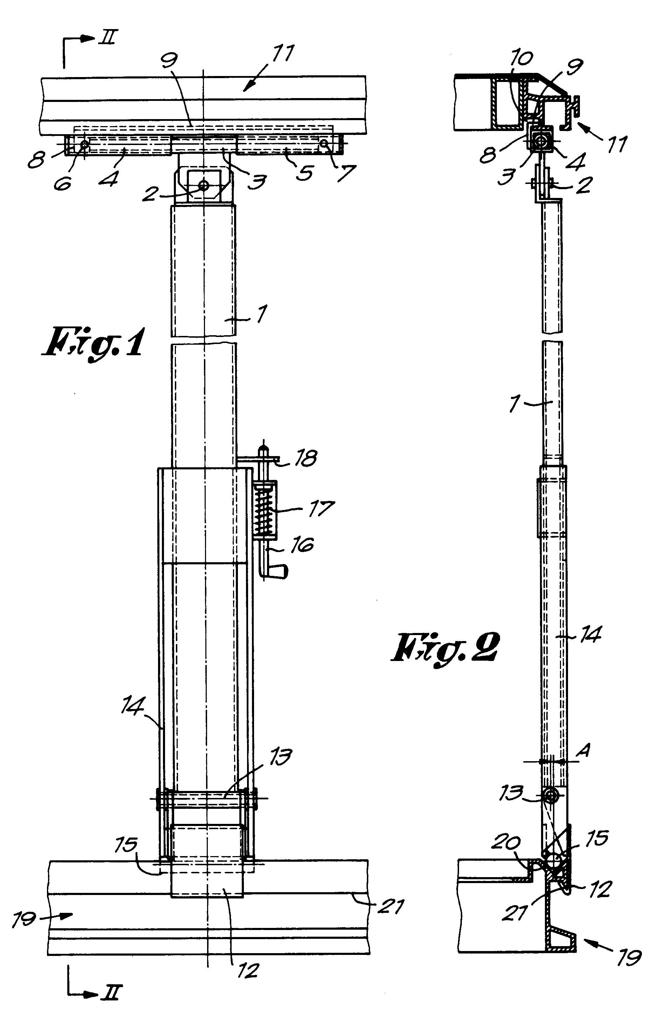

In the embodiments according to figures 1 through 4 the supporting structure according to the invention consists mainly in a pillar 1 which, through the intervention of a pin 2, is suspended in a hinging manner to a shaft 3 which is also installed in a freely rotating manner in two square tubes 4 and 5, where latter by means of a bolt or similar, respectively 6 and 7, are connected to a common L-shaped section 8 whose horizontal flange 9 is sliding in a space 10 provided for this purpose in the side section 11 of the roof construction of the bodywork.

The installation of this pillar 1 in section 11 is achieved by first turning the flange 9 into the space 10 and to only thereafter connect the construction 1 through 7 with this section 8.

At the bottom, the pillar 1 is extended by means of a hook 12 and hinging freely with this pillar 1, by means of a pin 13, a lever 14 is connected.

The lever 14 is equipped at its bottom with a cylindrical support 15 and shows a lock 16 on top which, by means of a spring 17, is constantly brought into a locked position, more especially by the cooperation of the lock 16 with an aperture provided therefore in a projection 18 on the pillar 1.

According to the invention, the side edge section 19 of the loading platform shows, on its overall length, on the one hand, a V-shaped groove 20 with which the cylindrical support 15 can cooperate and, on the other hand, a rib 21 behind which aforementioned hook 12 can fit.

The use of aforementioned pillar is very simple.

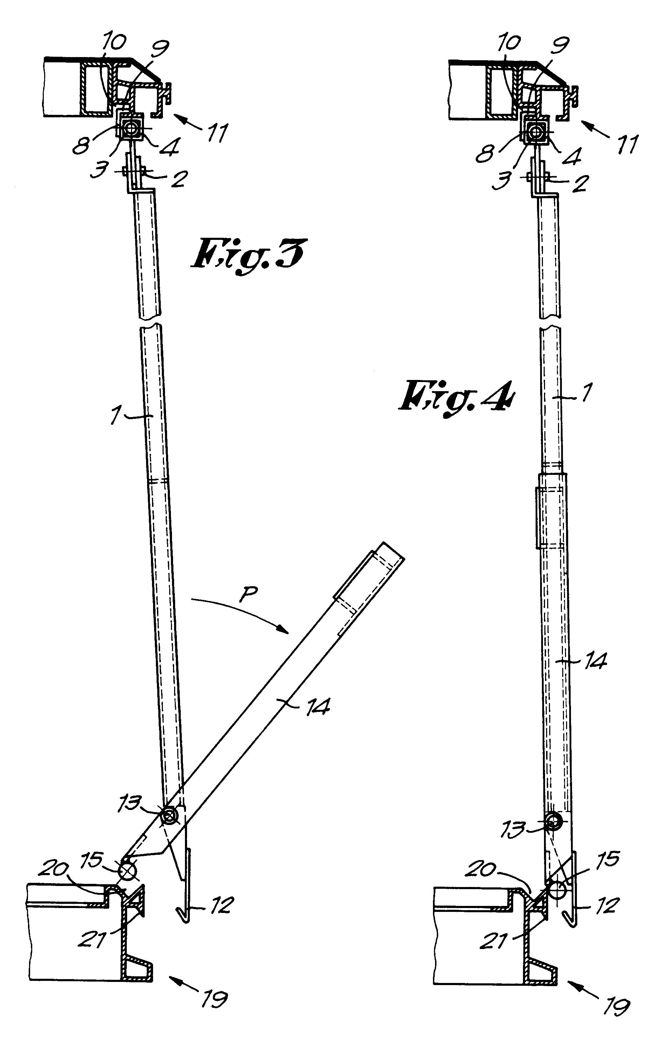

In the position according to figures 1 and 2 this pillar has been placed on a defined location of the vehicle in which the lock 16 cooperates with the projection 18, hook 12 is firmly located behind rib 21 and support the whole, by means of the cylindrical support 15, in the groove 20.

In order to move the pillar 1 it suffices to pull the lock 16 against the pressure of the spring 17, downward in order to release it from the projection 18 and to subsequently turn the lever 14 according to arrow P in figure 3.

In this way, on the one hand, the support 15 and, on the other hand, the hook 12 are released from the section 19.

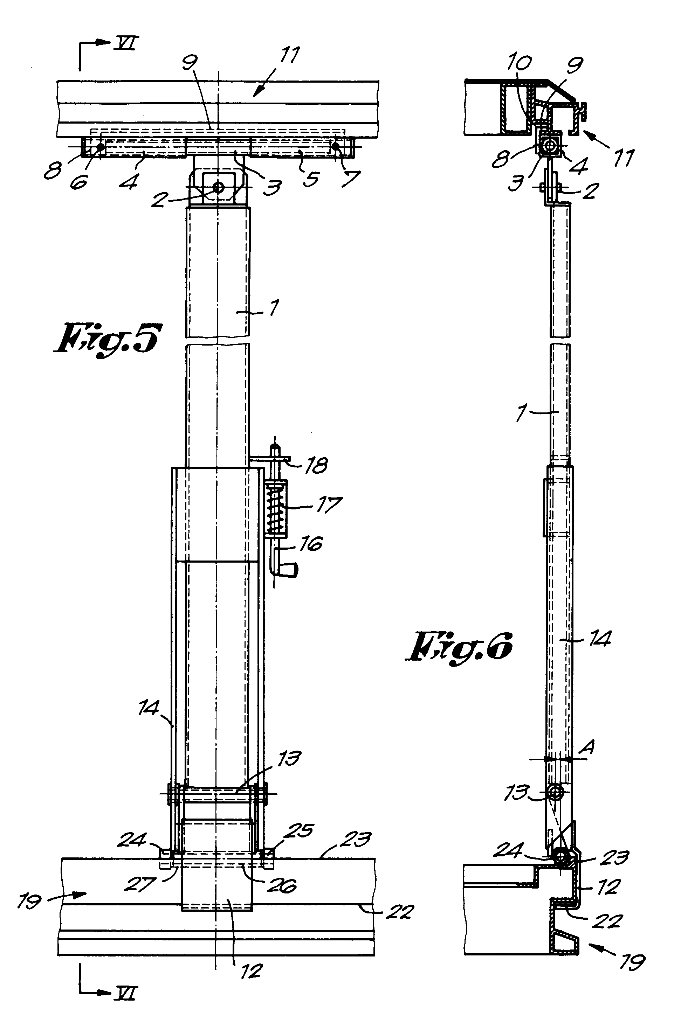

Subsequently the lever 14 shall be turned upward and the lock will be made to cooperate with the projection 18 in order to achieve that the pillar hangs loose on the section 8 as shown in figure 4.

At this time it suffices to transfer the complete pillar to the desired location by sliding it via section 8 into the space 10 of section 11.

Once the pillar is placed at the correct location the lock 16 will be released again and the lever will be pulled down to allow to locate, on the one hand, support 15 in the groove 20 and, on the other hand, hook 12 behind rib 21 in order to place the pillar again in the condition as shown in figures 1 and 2.

Figures 5 and 6 show a variant which only differs from previous in such way that the free extremity of the hook 12 cooperates with a horizontal plane 22 of the section 19, on the one hand, and that the section 19 is flattened on the top end and shows a rib 23 directed upwards on the outside.

Aforementioned cylindrical support 15 is being replaced in this case by a support which is not circular, for instance two hexagonal elements 24, 25 which are connected to each other by means of a shaft 26 around which a sleeve 27 is provided for and where latter is the effective connection with the lever 14.

The use of the pillar according to figures 5 and 6 is identical to aforementioned in the first example.

It should be noted that in the position in figures 2 and 6 the centre of the pin 13 is located at a distance A behind the centre of the support 15, respectively shaft 26.

It is clear that present invention is in no way limited to embodiments described as examples and shown in the drawings.

## Claims

1. Supporting structure in a bodywork with sliding tarpaulin, comprising at least one pillar (1) slidably suspended to the roof construction (11) of said bodywork, such that it can be slided in the longitudinal direction of said roof construction (11), characterised in that said pillar (1) is provided at its lower end of a hook (12) which can cooperate with a part (21,22) of the floor construction carrying said bodywork; in that said pillar (1) is provided of a lever (14) hinged to the pillar (1), this lever (14) showing at its lower end a support (15, 24-25-26-27) which can rest on the floor construction of said bodywork, and this lever (14) being movable between a position in which the pillar (1) is locked and a position in which the pillar (1) is movable; and in that said hook (12) and support (15, 24-25-26-27) allow the lower end of said pillar (1) to be coupled at any place to a section (19) extending continuously along the edge of the floor construction.

2. Supporting structure according to claim 1, characterized in that the pillar (1) as such is suspended in a hinging manner by means of a pin (2) to a shaft (3), whose axis is directed according to the longitudinal axis of the bodywork, whose extremities turn freely carried on bearings in tubes (4-5) which in turn are connected with a L-shaped section (8) whose horizontal flange (9) is freely transferable in a longitudinal space (10) provided for in the roof construction.

3. Supporting structure according to claim 1, characterized in that the lower part of the hook (12) is bent upwards and can hook up behind a rib (21) directed downward on the edge of the floor construction (19).

4. Supporting structure according to claim 1, characterized in that the lower part of the hook (12) is folded inward at an angle of 90 degrees and can hook up under a plane (22) in the side edge of the floor construction.

5. Supporting structure according to claim 1, characterized in that at the bottom end of the lever (14) a cylindrical support (15) directed with its axis according to the longitudinal axis of the bodywork is provided for.

6. Supporting structure according to claim 1, characterized in that the bottom end of the lever (14) shows a support (24-25-26-27) directed with its axis according to the longitudinal axis of the bodywork consisting in a sleeve (27) connected at the bottom of the lever (14) in which a freely rotating shaft (26) is supported by bearings and in which said shaft (26) is equipped with a support (24-25) at each extremity which shows one flat surface at least.

7. Supporting structure according to claim 6, characterized in that the supports (24-25) show an hexagonal form.

8. Supporting structure according to claim 1, 5, 6 or 7, characterized in that the side edge (19) of the bodywork floor, in its upper surface, shows a V-shaped groove (20) with which the support (15)(24-25) at the bottom of the lever (14) can cooperate.

9. Supporting structure according to claim 1, 5, 6 or 7, characterized in that the side edge (19) of the bodywork floor, in its upper surface, shows an upward directed rib (23).

10. Supporting structure according to one of aforementioned claims, characterized in that the centre of the hinged connection (13), between the pillar (1) and the lever (14), in the supporting position of the pillar, is placed at a distance (A) behind the centre of the support (15)(24-25).

11. Supporting structure according to one of aforementioned claims, characterized in that between the pillar (1) as such and the lever (14) a locking device (16-17-18) is provided.

12. Supporting structure according to claim 11, characterized in that the lock (16) is mounted on the lever (14) and can cooperate with an aperture in a projection (18) provided on the pillar (1).

13. Supporting structure according to claim 11 or 12, characterized in that the lock (16) is continually pushed to the locked position by means of a spring (17).

## Patentansprüche

1. Stützvorrichtung in einem Karosserieaufbau mit Schiebeplane, welche zumindest eine Säule (1) umfaßt, die verschiebbar an der Dachkonstruktion (11) besagten Karosserieaufbaus befestigt ist, derart, daß sie in der Längsrichtung besagter Dachkonstruktion (11) verschoben werden kann, dadurch gekennzeichnet, daß besagte Säule (1) an ihrem unteren Ende mit einem Haken (12) versehen ist, der mit einem Teil (21, 22) der Bodenkonstruktion zusammenwirkt, welche den besagten Karosserieaufbau trägt; dadurch, daß besagte Säule (1) mit einem abklappbar an der Säule (1) befestigten Hebel (14) versehen ist, wobei dieser Hebel (14) an seinem unteren Ende eine Stütze (15, 24-25-26-27) aufweist, die auf der Bodenkonstruktion des besagten Karosserieaufbaus aufliegt, und wobei dieser Hebel (14) zwischen einer Position, in der die Säule (1) verriegelt ist, und einer Position, in der die Säule (1) verschoben werden kann, bewegt werden kann; und dadurch, daß besagter Haken (12) und besagte Stütze (15, 24-25-26-27) es gestatten, das untere Ende besagter Säule (1) an einer beliebigen Stelle eines Profils (19), welches sich kontinuierlich entlang der Kante der Bodenkonstruktion erstreckt, einzuklinken.

2. Stützvorrichtung gemäß Anspruch 1, dadurch gekennzeichnet, daß die eigentliche Säule (1) abklappbar mittels eines Zapfens (2) an einem Schaft (3) aufgehängt ist, dessen Achse entsprechend der Längsachse des Karosserieaufbaus ausgerichtet ist, dessen Enden frei drehbar in Rohren (4-5) gelagert sind, die ihrerseits mit einem L-förmigen Profil (8) verbunden sind, dessen horizontaler Flansch (9) in einem in der Dachkonstruktion vorgesehenen länglichen Raum (10) frei verschiebbar ist.

3. Stützvorrichtung gemäß Anspruch 1, dadurch gekennzeichnet, daß der untere Teil des Hakens (12) nach oben gebogen ist und hinter einer nach unten gerichteten Rippe (21) an der Seitenkante der Bodenkonstruktion (19) einhaken kann.

4. Stützvorrichtung gemäß Anspruch 1, dadurch gekennzeichnet, daß der untere Teil des Hakens (12) mit einem Winkel von 90 Grad nach innen gebogen ist und unter einer Fläche (22) in die Seitenkante der Bodenkonstruktion einhaken kann.

5. Stützvorrichtung gemäß Anspruch 1, dadurch gekennzeichnet, daß am unteren Ende des Hebels (14) eine zylindrische Stütze (15) vorgesehen ist, deren Achse entsprechend der Längsachse des Karosserieaufbaus ausgerichtet ist.

6. Stützvorrichtung gemäß Anspruch 1, dadurch gekennzeichnet, daß das untere Ende des Hebels (14) eine Stütze (24-25-26-27) aufweist, deren Achse entsprechend der Längsachse des Karosserieaufbaus ausgerichtet ist, die eine am unteren Ende des Hebels (14) befestigte Muffe (27) umfaßt, worin ein frei drehbarer Schaft (26) gelagert ist und wobei besagter Schaft (26) an jedem Ende mit einer Stütze (24-25) ausgestattet ist, die zumindest eine flache Oberfläche aufweist.

7. Stützvorrichtung gemäß Anspruch 6, dadurch gekennzeichnet, daß die Stützen (24-25) einen sechseckigen Querschnitt aufweisen.

8. Stützvorrichtung gemäß den Ansprüchen 1, 5, 6 oder 7, dadurch gekennzeichnet, daß die Seitenkante (19) des Karosserieaufbaubodens an seiner Oberseite eine V-förmige Nut (20) aufweist, womit die Stütze (15) (24-25) am unteren Ende des Hebels (14) zusammenwirken kann.

9. Stützvorrichtung gemäß den Ansprüchen 1, 5, 6 oder 7, dadurch gekennzeichnet, daß die Seitenkante (19) des Aufbaubodens an seiner Oberseite eine nach oben gerichtete Rippe (23) aufweist.

10. Stützvorrichtung gemäß einem der vorgenannten Ansprüche, dadurch gekennzeichnet, daß die Mitte der abklappbaren Verbindung (13) zwischen der Säule (1) und dem Hebel (14) in der Stützposition der Säule in einem Abstand (A) hinter der Mitte der Stütze (15)(24-25) angebracht ist.

11. Stützvorrichtungen gemäß einem der vorgenannten Ansprüche, dadurch gekennzeichnet, daß zwischen der eigentlichen Säule (1) und dem Hebel (14) eine Riegelvorrichtung (16-17-18) angebracht ist.

12. Stützvorrichtung gemäß Anspruch 11, dadurch gekennzeichnet, daß der Riegel (16) auf dem Hebel (14) montiert ist und mit einer Öffnung in einer an der Säule (1) vorgesehenen Projektion (18) zusammenwirken kann.

13. Stützvorrichtung gemäß den Ansprüchen 11 oder 12, dadurch gekennzeichnet, daß der Riegel (16) mittels einer Feder (17) ständig in verriegelte Position gedrückt wird.

## Revendications

1. Structure procurant un support dans une carrosserie munie d'une bâche goudronnée, comprenant au moins un montant (1) suspendu en coulissement à la construction de toit (11) de ladite carrosserie, de telle sorte qu'il puisse coulisser en direction longitudinale par rapport à ladite construction de toit (11), caractérisée en ce que ledit montant (1) est muni, à son extrémité inférieure, d'un crochet (12) qui peut coopérer avec une partie (21, 22) de la construction de plancher portant ladite carrosserie; en ce que ledit montant (1) est équipé d'un levier (14) articulé au montant (1), ledit levier (14) présentant, à son extrémité inférieure, un support (15, 24-25-26-27) qui peut s'appuyer sur la construction de plancher de ladite carrosserie, et ce levier (14) étant mobile entre une position dans laquelle le montant (1) est bloqué et une position dans laquelle le montant (1) est mobile; et en ce que ledit crochet (12) et le support (15, 24-25-26-27) permettent à l'extrémité inférieure dudit montant (1) de s'accoupler à n'importe quel endroit à un profilé (19) s'étendant en continu le long du bord de la construction de plancher.

2. Structure procurant un support selon la revendication 1, caractérisée en ce que le montant (1) comme tel est suspendu d'une manière articulée au moyen d'une broche (2) à un arbre (3) dont l'axe est orienté en direction de l'axe longitudinal de la carrosserie, dont les extrémités tournent librement en étant supportées sur des paliers disposés dans des tubes (4-5), qui, à leur tour, sont reliés à un profilé (8) en L dont le rebord horizontal (9) est apte à être déplacé librement dans un espace longitudinal (10) prévu dans la construction de toit.

3. Structure procurant un support selon la revendication 1, caractérisée en ce que la partie inférieure du crochet (12) est pliée vers le haut et peut venir saisir, par l'arrière, une nervure (21) dirigée vers le bas sur le bord de la construction de plancher (19).

4. Structure procurant un support selon la revendication 1, caractérisée en ce que la partie inférieure du crochet (12) est repliée vers l'intérieur en formant un angle de 90° et peut saisir la face inférieure d'un plan (22) dans le bord latéral de la construction de plancher.

5. Structure procurant un support selon la revendication 1, caractérisée en ce que, à l'extrémité inférieure du levier (14), on prévoit un support cylindrique (15) dont l'axe est orienté en direction de l'axe longitudinal de la carrosserie.

6. Structure procurant un support selon la revendication 1, caractérisée en ce que l'extrémité inférieure du levier (14) présente un support (24-25-26-27) dont l'axe est orienté en direction de l'axe longitudinal de la carrosserie, consistant en un manchon (27) relié à la base du levier (14) dans lequel un arbre (26) à rotation libre est supporté par des paliers et dans lequel ledit arbre (26) est équipé d'un support (24-25) à chaque extrémité, qui présente au moins une surface plate.

7. Structure procurant un support selon la revendication 6, caractérisée en ce que les supports (24-25) présentent une forme hexagonale.

8. Structure procurant un support selon la revendication 1, 5, 6 ou 7, caractérisée en ce que le bord latéral (19) du plancher de carrosserie, dans sa surface supérieure, présente une rainure (20) en V avec laquelle peut coopérer le support (15, 24-25) à la base du levier (14).

9. Structure procurant un support selon la revendication 1, 5, 6 ou 7, caractérisée en ce que le bord latéral (19) du plancher de carrosserie, dans sa surface supérieure, présente une nervure (23) dirigée vers le haut.

10. Structure procurant un support selon l'une quelconque des revendications précédentes, caractérisée en ce que le centre de la liaison articulée (13), entre le montant (1) et le levier (14), dans la position de support du montant, est placé à une distance (A) derrière le centre du support (15, 24-25).

11. Structure procurant un support selon l'une quelconque des revendications précédentes, caractérisée en ce que, entre le montant (1) comme tel et le levier (14), on procure un dispositif de verrouillage (16-17-18).

12. Structure procurant un support selon la revendication 11, caractérisée en ce que le verrou (16) est monté sur le levier (14) et peut coopérer avec une ouverture pratiquée dans une saillie (18) prévue sur le montant (1).

13. Structure procurant un support selon la revendication 11 ou 12, caractérisée en ce que le verrou (16) est poussé en continu dans la position de verrouillage au moyen d'un ressort (17).
